# EUROPÄISCHE PATENTSCHRIFT

(11) **EP 0 942 642 B1**
(45) Veröffentlichungstag und Bekanntmachung des Hinweises auf die Patenterteilung: **12.03.2003**
(21) Anmeldenummer: 97954367.5
(22) Anmeldetag: 09.12.1997
(51) Int. Cl.: A01D 34/13

(54) **TRENNSCHNEIDWERK, INSBESONDERE FÜR RAPS**
SEPARATION CUTTER, IN PARTICULAR FOR RAPE
DISPOSITIF DE COUPE ET DE SEPARATION, EN PARTICULIER POUR COLZA

(30) Priorität: 09.12.1996 DE 19651098
(43) Veröffentlichungstag der Anmeldung: 22.09.1999
(73) Patentinhaber: Schrattenecker, Franz, A-4773 Eggerding (AT)
(72) Erfinder: Schrattenecker, Franz, A-4773 Eggerding (AT)
(74) Vertreter: Zinnecker, Armin, Dipl.-Ing.
(86) Internationale Anmeldenummer: EP9706870
(87) Internationale Veröffentlichungsnummer: WO98025446

(56) Entgegenhaltungen:
- DE-C- 598 983
- DE-U- 9 202 253
- US-A- 2 664 690
- US-A- 2 735 254
- US-A- 2 769 296
- PATENT ABSTRACTS OF JAPAN vol. 096, no. 007, 31.Juli 1996 & JP 08 056448 A (MITSUBISHI AGRICULT MACH CO LTD), 5.März 1996,

## Beschreibung

Die Erfindung betrifft ein Trennschneidwerk, insbesondere für Raps, mit einem Trennerhalter, an dem zwei mit Messern versehene Messerführungen vorgesehen sind, die relativ zueinander beweglich geführt sind.

Derartige Trennschneidwerke bzw. Rapstrennschneidwerke sind in der Praxis bereits - bekannt. An dem Trennerhalter, der auch als Balken bezeichnet wird, sind üblicherweise zwei Messerführungen vorgesehen, die zueinander längsverschieblich hinund herbewegbar sind. Üblicherweise gleiten die Messerführungen aufeinander. Sie werden durch einen Kurbeltrieb angetrieben und sind üblicherweise beide relativ zum Trennerhalter beweglich. Es ist aber auch eine Ausgestaltung möglich, bei der eine der beiden Messerführungen feststeht bzw. mit dem Trennerhalter verbunden ist und nur die andere Messerführung hin- und herbeweglich ist.

Aus der DE 92 02 253 U ist eine Gruppe von Mäherbalken bekannt, die für Motormähmaschinen kleinerer Dimensionen, beispielsweise für Motormähmaschinen für den Garten bestimmt ist. Das dort beschriebene Trennschneidwerk umfaßt einen Trennerhalter, an dem zwei mit Messern versehene Messerführungen vorgesehen sind, die relativ zueinander beweglich geführt sind. An dem Trennerhalter sind mehrere Führungshalter zum Führen der Messerführungen vorgesehen. Ferner sind zwischen den Führungshaltern und den Messerführungen Führungen aus einem Material mit niedrigem Reibungswert, beispielsweise Nylon, vorgesehen.

Die Aufgabe der Erfindung besteht darin, ein Trennschneidwerk der vorbekannten Art zu verbessern.

Erfindungsgemäß wird diese Aufgabe durch die Merkmale des Anspruchs 1 gelöst. Die Führungen weisen Erhebungen auf, die von entsprechenden Vertiefungen oder Durchbrüchen in den Führungshaltern aufgenommen werden. Die Lage der Führungen an den Führungshaltern wird auf diese Weise fixiert. Hierdurch wird der Gefahr des Verkantens der Messerführungen in den Führungen begegnet. Die Lagefixierung in den Führungshaltern wird auf besonders einfache und wirkungsvolle Weise erreicht. Hierbei ist von Vorteil, wenn die Erhebungen nicht rund ausgestaltet sind, sondern eine eckige, vorzugsweise quadratische Form aufweisen. Es ist natürlich auch möglich, die Erhebungen in den Führungshaltern vorzusehen und die Führungen mit entsprechenden Vertiefungen oder Durchbrüchen auszugestalten.

Vorteilhafte Weiterbildungen sind in den Unteransprüchen beschrieben.

Eine vorteilhafte Weiterbildung ist dadurch gekennzeichnet, daß die Fixierungspunkte der Führungen auf einer zur Längsrichtung des Trennerhalters und damit der Messerführungen parallelen Linie liegen.

Vorzugsweise ist der Trennerhalter einstückig ausgeführt. Hierdurch wird die Festigkeit erhöht und die Montage vereinfacht. Ferner werden die Einstellmöglichkeiten verbessert.

Der Trennerhalter ist vorzugsweise symmetrisch ausgeführt, so daß die Schnittebene der Messer in der Mitte des Trennerhalters verläuft. Hierdurch werden die Verluste bzw. Rapsverluste geringer. Das Trennschneidwerk bzw. Rapstrennschneidwerk ist nämlich üblicherweise an einem Mähdrescher befestigt, und zwar derart, daß es an einem Seitenende des Mähdreschers vertikal verläuft. Durch das Trennschneidwerk bzw. Rapstrennschneidwerk soll ein sauberer Trennschnitt erzeugt werden. Dadurch, daß sich die Schneidebene in der Mitte des Schneidwerkes befindet, können sich die seitlich des Mähdreschers stehenbleibenden Pflanzen bzw. der dort seitlich stehendbleibende Raps weniger in hervorstehenden Teilen des Schneidwerks verfangen, so daß der Trennschnitt verbessert wird.

Eine weitere vorteilhafte Weiterbildung ist dadurch gekennzeichnet, daß die Führungshalter mit dem Trennerhalter einstückig ausgeführt sind. Auch hierdurch wird die Festigkeit erhöht und die Montage vereinfacht. Die Einstellmöglichkeiten werden verbessert.

Zwischen den Führungshaltern und den Messerführungen sind Führungen vorgesehen. Diese Führungen werden vorzugsweise aus Kunststoff ausgebildet. Es können aber auch andere Materialien verwendet werden, an denen die Messerführungen gut gleiten können.

Vorteilhaft ist es, die Führungen mit den Führungshaltern zu verspannen. Dies kann auf besonders vorteilhafte Weise durch eine Schraubverbindung geschehen. Die Verspannung ist mit besonderem Vorteil bei einem symmetrisch ausgeführten Trennerhalter anwendbar, bei dem sie sich vorzugsweise über die beiden symmetrisch ausgebildeten Teile erstreckt.

Eine weitere vorteilhafte Weiterbildung ist dadurch gekennzeichnet, daß die Führungen an mehreren, vorzugsweise zwei Stellen mit den Führungshaitern verspannt sind. Hierdurch sind die Führungen besonders wirkungsvoll gegen Verdrehen gesichert, was wiederum besonders zuverlässig verhindert, daß die Messerführungen in den Führungen verkanten.

Vorteilhaft ist es, wenn einige bzw. alle Verspannungspunkte der Führungen auf einer Linie liegen, die zur Längsrichtung des Trennerhalters und damit auch zu den Messerführungen parallel verläuft.

Vorteilhaft ist es, an der den Messern abgewandten Seite der Verspannungspunkte der Führungen Abstandhalter vorzusehen. Hierdurch kann bei einer Verspannung der Führungen ein erheblicher Druck auf die Messerführungen und damit die Messer erreicht werden.

Ein Ausführungsbeispiel der Erfindung wird nachstehend anhand der beigefügten Zeichnung im einzelnen erläutert. In der Zeichnung zeigt
- Fig. 1: ein Rapstrennschneidwerk von unten,
- Fig. 2: eine Vorderansicht und
- Fig. 3: eine Ansicht von der Seite.

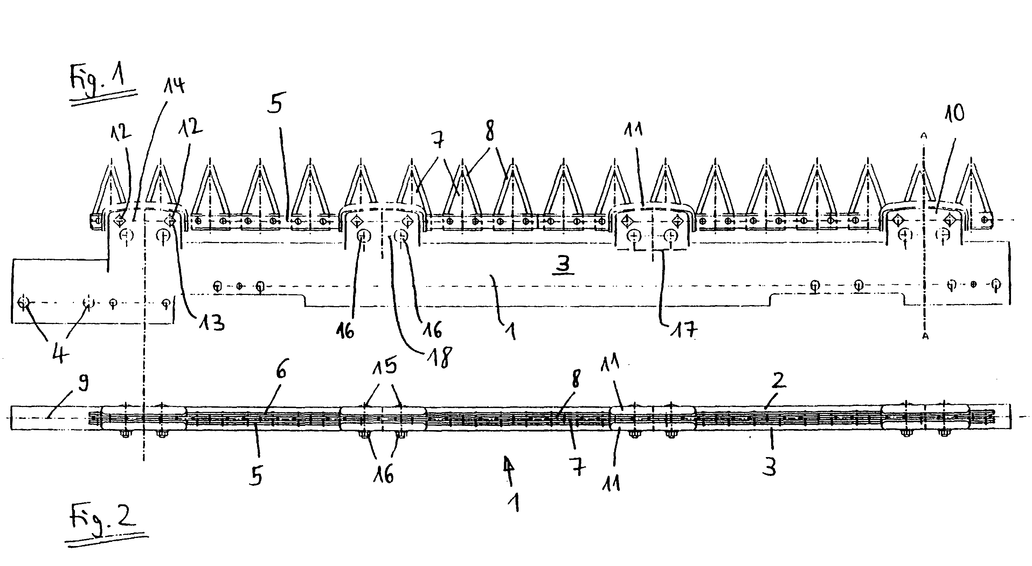

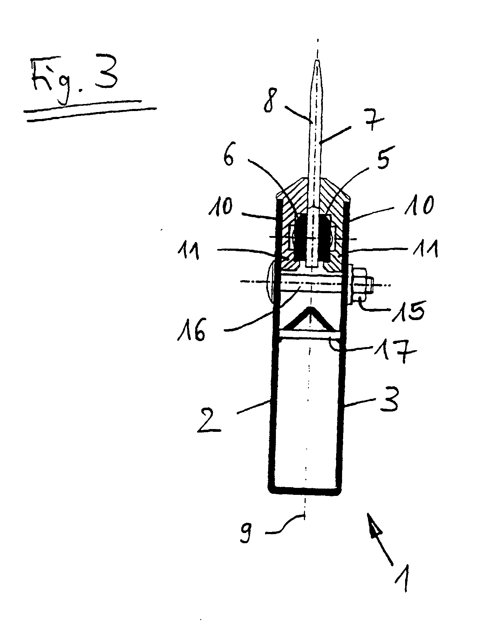

Das Rapstrennschneidwerk besitzt einen Trennerhalter 1, der aus einem Oberteil 2 und einem Unterteil 3 besteht. Der Trennerhalter 1 kann an einem Ende durch in der Zeichnung nicht dargestellte Bolzen, die an einem Ende des Trennerhalters 1 entsprechende Löcher 4 durchgreifen, mit einem Mähdrescher verbunden werden.

An dem Trennerhalter sind zwei Messerführungen 5, 6 beweglich geführt. Sie werden durch zwei in der Zeichnung nicht dargestellte Kurbeltriebe sowohl relativ zueinander als auch relativ zum Trennerhalter hin- und herbewegt. An jeder Messerführung 5, 6 sind Messer 7, 8 vorgesehen, die als spitz zulaufende, gleich große und gleich beabstandete, vom Trennerhalter 1 weg weisende Dreiecke ausgestaltet sind.

Der Trennerhalter 1 ist einstückig ausgeführt. Es ist aber auch möglich, jeweils das Oberteil 2 und das Unterteil 3 einstückig auszugestalten und diese beiden Teile dann miteinander zu verbinden. Wie aus den Zeichnungen ersichtlich, ist der Trennerhalter 1 ferner symmetrisch ausgeführt. Oberteil 2 und Unterteil 3 sind also symmetrisch zueinander. Die Schneidebene 9 liegt in der Längsmittenebene des Trennerhalters 1.

Mit dem Oberteil 2 und dem Unterteil 3 sind jeweils vier Führungshalter 10 einstückig verbunden, die sich jeweils parallel zueinander und beabstandet voneinander gegenüberliegen. Die Messerführungen 5, 6 verlaufen jeweils zwischen zwei gegenüberliegenden Führungshaltern 10. Zwischen einem Führungshalter 10 und einer Messerführung 5, 6 ist jeweils eine Führung 11 aus Kunststoff vorgesehen. Die Messerführungen 5, 6 gleiten jeweils aneinander und an der Innenseite einer Kunststoffführung 11.

Die Kunststofführungen sind in ihrer Lage an den Führungshaltern 10 durch quadratische Erhebungen 12 fixiert, die von entsprechenden Durchbrüchen 13 in den Führungshaltern 10 aufgenommen werden. Für jeden Führungshalter 10 sind jeweils zwei durch Erhebungen 12 und Durchbrüche 13 gebildete Fixierungspunkte vorhanden, deren Verbindungslinie 14 parallel zur Längsrichtung des Trennerhalters 1 und damit parallel zu den Messerführungen 5, 6 verläuft. Wie aus den Zeichnungen ersichtlich, deckt sich die genannte Verbindungslinie mit der Längsmittenachse der Messerführungen 5, 6, was einen besonders zuverlässigen Schutz gegen eine Verkantung der Messerführungen 5, 6 in den Kunststofführungen 11 bewirkt.

Die Kunststofführungen 11 sind mit den Führungshaltern 10 verspannt. Dies erfolgt durch Schraubverbindungen, die von Schraubboizen 15 und Muttern 16 gebildet werden. Die Köpfe der Schraubbolzen 15 liegen an den Führungshaltern 10 des Oberteils 2 an. Sie erstrecken sich durch miteinander fluchtende Bohrungen zweier gegenüberliegender Führungshalter 10 des Oberteils 2 und des Unterteils 3 hindurch. Das mit einem Gewinde versehene Ende des Schraubbolzenz 15 wird mit einer Mutter 16 verschraubt. Die Verspannung erfolgt durch das Festziehen der Mutter 16.

An der den Messern 7, 8 abgewandten Seite der Schraubbolzen 15 sind als Verbindungsbleche ausgebildete Abstandhalter 17 vorgesehen, die sich an den Innenseiten gegenüberliegender Führungshalter 10 abstützen und dort einen definierten Absatz der Führungshalter voneinander gewährleisten. Wenn die Muttern 16 auf den zugehörigen Schraubbolzen 15 weiter angezogen werden, wird durch die Hebelwirkung, die durch den Abstand der Schraubbolzen 15 von den Abstandhaltern 17 erzeugt wird, ein Druck auf die Kunststofführungen 11 ausgeübt, der im Bereich der Erhebungen 12 in die Kunststofführungen 11 eingeleitet wird. Ausmaß und Stärke des Drucks können durch die Abstände zwischen Abstandhalter 17 und Schraubbolzen 15/Mutter 16 einerseits sowie von den Schraubbolzen 15/Muttern 16 zu den Erhebungen 12/Durchbrüchen 13 beeinflußt werden. Um durch die Verspannung der Schraubbolzen 15 einen Druck auf die Kunststofführungen 11 und damit die Messerführungen 5, 6 ausüben zu können, müssen sich die Schraubbolzen 15 zwischen den Abstandhaltern 17 und den Erhebungen 12 befinden.

Pro Führungshalter 10 sind jeweils zwei Schraubbolzen 15 vorgesehen. Die Verbindungslinie 18 zweier Schraubbolzen 15 verläuft parallel zur Längsachse des Trennerhalters 1 und damit parallel zu den Messerführungen 5, 6.

Das Rapstrennschneidwerk ist wesentlich leichtzügiger als vorbekannte Ausführungsformen, da die Messerführungen 5, 6 in den Kunststofführungen 11 nicht verkanten können. Die Kunststofführungen 11 sind durch die in den Durchbrüchen 13 befindlichen Erhebungen 12 einwandfrei fixiert. Da der Trennerhalter 1 einstückig ausgebildet ist, können alle Bauteile und insbesondere diejenigen Bauteile, durch die die Messerführungen 5, 6 geführt werden, sehr zuverlässig und genau justiert werden. Ein weiterer Vorteil besteht darin, daß durch die Führungshaiter 10 ein verhältnismäßig starker Druck auf die Messerführungen 5, 6 ausgeübt werden kann, und zwar durch die Verspannung mit den Schraubbolzen 15 und den Muttern 16.

## Patentansprüche

1. Trennschneidwerk, insbesondere für Raps, mit einem Trennerhalter (1), an dem zwei mit Messern (7, 8) versehene Messerführungen (5, 6) vorgesehen sind, die relativ zueinander beweglich geführt sind und an dem mehrere Führungshalter (10) zum Führen der Messerführungen (5, 6) vorgesehen sind, wobei zwischen den Führungshaltern (10) und den Messerführungen (5, 6) Führungen (11), vorzugsweise aus Kunststoff, vorgesehen sind, deren Lage an den Führungshaltern (10) fixiert ist,
**dadurch gekennzeichnet,**
**daß** die Führungen (11) Erhebungen (12) aufweisen, die von entsprechenden Vertiefungen oder Durchbrüchen (13) in den Führungshaltern (10) aufgenommen werden.

2. Trennschneidwerk nach Anspruch 1, **dadurch gekennzeichnet, daß** die Fixierungspunkte (12, 13) der Führungen (11) auf einer zur Längsrichtung des Trennerhalters (1) parallelen Linie (14) liegen.

3. Trennschneidwerk nach Anspruch 1 oder 2, **dadurch gekennzeichnet, daß** der Trennerhalter (1) einstückig ausgeführt ist.

4. Trennschneidwerk nach einem der vorhergehenden Ansprüche, **dadurch gekennzeichnet, daß** der Trennerhalter (1) symmetrisch (2, 3) ausgeführt ist.

5. Trennschneidwerk nach einem der vorhergehenden Ansprüche, **dadurch gekennzeichnet, daß** die Führungshalter (10) mit dem Trennerhalter (l; 2, 3) einstückig ausgeführt sind.

6. Trennschneidwerk nach einem der vorhergehenden Ansprüche, **dadurch gekennzeichnet, daß** die Führungen (11) mit den Führungshaltern (10) verspannt sind, vorzugsweise durch eine Schraubverbindung (15, 16).

7. Trennschneidwerk nach einem der vorhergehenden Ansprüche, **dadurch gekennzeichnet, daß** die Führungen (11) an mehreren, vorzugsweise zwei Stellen mit den Führungshaltem (10) verspannt sind.

8. Trennschneidwerk nach Anspruch 7, **dadurch gekennzeichnet, daß** einige, vorzugsweise alle Verspannungspunkte (15, 16) der Führungen (11) auf einer zur Längsrichtung des Trennerhalters (1) parallelen Linie (18) liegen.

9. Trennschneidwerk nach einem der Ansprüche 6 bis 8, **gekennzeichnet durch** Abstandhalter (17), die an der den Messern (7, 8) abgewandten Seite der Verspannungspunkte (15, 16) der Führungen (11) vorgesehen sind.

## Claims

1. Dividing/cutting mechanism, in particular for rape, having a divider holder (1), on which two cutter guides (5, 6), which are provided with cutters (7, 8) and movably guided relative to one another, are provided and on which a plurality of guide holders (10) for guiding the cutter guides (5, 6) are provided, guides (11), preferably made of plastic, being provided between the guide holders (10) and the cutter guides (5, 6), the position of these guides (11) being fixed on the guide holders (10), **characterized in that** the guides (11) have prominences (12) which are accommodated by corresponding recesses or apertures (13) in the guide holders (10).

2. Dividing/cutting mechanism according to Claim 1, **characterized in that** the fixing points (12, 13) of the guides (11) lie on a line (14) parallel to the longitudinal direction of the divider holder (1).

3. Dividing/cutting mechanism according to Claim 1 or 2, **characterized in that** the divider holder (1) is made in one piece.

4. Dividing/cutting mechanism according to one of the preceding claims, **characterized in that** the divider holder (1) is designed to be symmetrical (2, 3).

5. Dividing/cutting mechanism according to one of the preceding claims, **characterized in that** the guide holders (10) are made in one piece with the divider holder (1; 2, 3).

6. Dividing/cutting mechanism according to one of the preceding claims, **characterized in that** the guides (11) are restrained together with the guide holders (10), preferably by a screwed connection (15, 16).

7. Dividing/cutting mechanism according to one of the preceding claims, **characterized in that** the guides (11) are restrained together with the guide holders (10) at several, preferably two, locations.

8. Dividing/cutting mechanism according to Claim 7, **characterized in that** some restraining points (15, 16), preferably all the restraining points (15, 16), of the guides (11) lie on a line (18) parallel to the longitudinal direction of the divider holder (1).

9. Dividing/cutting mechanism according to one of Claims 6 to 8, **characterized by** spacers (17) which are provided on that side of the restraining points (15, 16) of the guides (11) which is remote from the cutters (7, 8).

## Revendications

1. Dispositif de séparation et de coupe, en particulier pour du colza, avec un support de séparateur (1) auquel sont prévus deux guidages de couteau (5, 6) pourvus de couteau (7, 8), qui sont guidés d'une manière déplaçable l'un relativement à l'autre et auquel sont prévus plusieurs supports de guidage (10) pour guider les guidages de couteau (5, 6), où sont prévus entre les supports de guidage (10) et les guidages de couteau (5, 6) des guidages (11), de préférence en matériau synthétique, dont la position est fixée aux supports de guidage (10),
**caractérisé**
**en ce que** les guidages (11) présentent des surélévations (12) qui sont reçues par des creux ou perçages correspondants (13) dans les supports de guidage (10).

2. Dispositif de séparation et de coupe selon la revendication 1, **caractérisé en ce que** les points de fixation (12, 13) des guidages (11) se situent sur une ligne (14) parallèle à la direction longitudinale du support de séparateur (1).

3. Dispositif de séparation et de coupe selon la revendication 1 ou 2, **caractérisé en ce que** le support de séparateur (1) est réalisé en une pièce.

4. Dispositif de séparation et de coupe selon l'une des revendications précédentes, **caractérisé en ce que** le support de séparateur (1) est réalisé d'une manière symétrique (2, 3).

5. Dispositif de séparation et de coupe selon l'une des revendications précédentes, **caractérisé en ce que** les supports de guidage (10) sont réalisés en une pièce avec le support de séparateur (1 ; 2, 3).

6. Dispositif de séparation et de coupe selon l'une des revendications précédentes, **caractérisé en ce que** les guidages (11) sont mis en tension avec les supports de guidage (10), de préférence par un assemblage par vissage (15, 16).

7. Dispositif de séparation et de coupe selon l'une des revendications précédentes, **caractérisé en ce que** les guidages (11) sont mis en tension à plusieurs emplacements, de préférence à deux emplacements avec les supports de guidage (10).

8. Dispositif de séparation et de coupe selon la revendication 7, **caractérisé en ce que** quelques-uns, de préférence tous les points de mise en tension (15, 16) des guidages (11) se situent sur une ligne (18) parallèle à la direction longitudinale du support de séparateur (1).

9. Dispositif de séparation et de coupe selon l'une des revendications 6 à 8, **caractérisé par** des pièces d'écartement (17) qui sont prévues au côté, éloigné des couteaux (7, 8), des points de mise en tension (15, 16) des guidages (11).
